# EUROPÄISCHE PATENTSCHRIFT

(11) **EP 3 350 510 B1**
(45) Veröffentlichungstag und Bekanntmachung des Hinweises auf die Patenterteilung: **05.11.2025**
(21) Anmeldenummer: 16763430.2
(22) Anmeldetag: 24.08.2016
(51) Int. Cl.: F21V 8/00

(54) **BELEUCHTUNGSANORDNUNG**
LIGHTING ASSEMBLY
SYSTÈME D'ECLAIRAGE

(30) Priorität: 15.09.2015 DE 202015104882 U
(43) Veröffentlichungstag der Anmeldung: 25.07.2018
(73) Patentinhaber: Zumtobel Lighting GmbH, 6850 Dornbirn (AT)
(72) Erfinder: KELLER, Katharina, 88161 Lindau (DE)
(74) Vertreter: Thun, Clemens
(86) Internationale Anmeldenummer: PCT/AT2016/060039
(87) Internationale Veröffentlichungsnummer: WO 2017/044999

(56) Entgegenhaltungen:
- DE-A1- 102011 087 543
- US-A1- 2007 081 360
- US-A1- 2007 147 760
- US-A1- 2008 084 708
- US-A1- 2010 014 027

## Beschreibung

Die vorliegende Erfindung betrifft eine Beleuchtungsanordnung mit mindestens einer Lichtquelle, insbesondere eine LED, und einem flächigen Lichtleiter zur Lichtabgabe über mindestens eine der Flachseiten des flächigen Lichtleiters.

Bei Beleuchtungsanordnungen mit flächigen Lichtleitern ist es zumeist vorgesehen, dass die flächigen Lichtleiter ihr Licht über eine der Flachseiten der flächigen Lichtleiter abgeben beziehungsweise dass das Licht über eine der Flachseiten aus den flächigen Lichtleitern ausgekoppelt wird.

Bei derartigen flächigen Lichtleitern kann es sich beispielsweise um einen Lichtleiter handeln, der im Querschnitt im Wesentlichen rechteckig ausgestaltet ist, wobei dann insbesondere vorgesehen ist, dass zwei große breite Flachseiten einander gegenüberliegend angeordnet sind und jeweils an den Seiten entsprechende Schmalseiten beziehungsweise Stirnseiten ebenfalls einander gegenüberliegend angeordnet sind. Diese auch als Seitenflächen oder Längsseiten des flächigen Lichtleiters anzusehenden Schmalseiten beziehungsweise Stirnseiten sind dabei erheblich dünner beziehungsweise schmäler ausgebildet als die Flachseiten, so dass sich eine Platte als flächiger Lichtleiter ergibt.

Bei Beleuchtungsanordnungen mit derartigen flächigen Lichtleitern ist es bisher dann zumeist vorgesehen, an den Schmalseiten beziehungsweise Stirnseiten des flächigen Lichtleiters entsprechende Lichtquellen, insbesondere LEDs, in Längsrichtung anzuordnen, die Licht unmittelbar in den flächigen Lichtleiter über die Schmalseiten beziehungsweise Stirnseiten einkoppeln. Das durch die Lichtquellen beziehungsweise LEDs über die Schmalseiten beziehungsweise Stirnseiten in den flächigen Lichtleiter eingekoppelte Licht wird dann in dem flächigen Lichtleiter durchmischt, wobei der flächige Lichtleiter derart ausgestaltet ist, dass aufgrund von entsprechenden Totalreflexionen innerhalb des flächigen Lichtleiters das Licht durch den flächigen Lichtleiter geleitet wird und dann an einer der beiden oder an beiden Flachseiten des flächigen Lichtleiters abgegeben beziehungsweise ausgekoppelt wird. Die Durchmischung erfolgt dabei in dem flächigen Lichtleiter, während das Licht durch den flächigen Lichtleiter geleitet wird.

Diese Ausgestaltung bringt jedoch einige Nachteile mit sich. So entsteht beispielsweise, wenn die Lichtfarbe beziehungsweise Farbtemperatur des abgegebenen Lichts durch Kombinieren unterschiedlicher LED-Typen und Verändern der jeweiligen Leistung eingestellt werden soll, das Problem, dass keine optimale Durchmischung des Lichts der unterschiedlichen LED-Typen erzielt wird, was insbesondere in Randbereichen des flächigen Lichtleiters dazu führt, dass hier hinsichtlich der Farbe beziehungsweise der Farbtemperatur Inhomogenitäten auftreten, durch welche eine gleichmäßige Lichtabgabe beeinträchtigt wird.

Ein anderes Problem besteht darin, dass abhängig von der Leistung der jeweiligen LEDs ein gewisser Abstand zwischen den LEDs an der Schmalseite beziehungsweise Stirnseite des flächigen Lichtleiters zu wählen ist, um Licht mit der gewünschten Helligkeit abzugeben. Hierbei kann durchaus der Fall auftreten, dass für leistungsstarke LEDs ein verhältnismäßig großer Abstand zu wählen ist, der wiederum zu Inhomogenitäten hinsichtlich der Helligkeit bei der Lichtabgabe des flächigen Lichtleiters führt.

Des Weiteren kann ein Problem auch darin bestehen, dass beispielsweise insbesondere in den Randbereichen des flächigen Lichtleiters die Lichtabgabe etwas schwächer ausfällt, da aufgrund der unmittelbaren Anordnung der LEDs an einer der Schmalseiten beziehungsweise Stirnseiten nicht sicher gewährleistet werden kann, dass das Licht gleichmäßig über den gesamten flächigen Lichtleiter verteilt wird.

Die Schriften US 2010/0014027 A1, US 2008/0084708A1 und US 2007/0147760 A1 beschreiben Leuchtenanordnungen, welche neben dem flächigen Lichtleiter einen zusätzlichen Lichtleiter aufweisen, welcher an einer Schmalseite des flächigen Lichtleiters angeordnet ist, wobei die LED ihr Licht in den zusätzlichen Lichtleiter einstrahlen, welcher das Licht dann in den flächigen Lichtleiter einstrahlt, welcher dann das Licht über einen flächigen Bereich an die Umgebung abgibt.

Der vorliegenden Erfindung liegt dementsprechend die Aufgabe zugrunde, die Nachteile bei der Anordnung der LEDs beziehungsweise der Lichtquellen unmittelbar an einer Schmalseite beziehungsweise Stirnseite des flächigen Lichtleiters zu verbessern. Insbesondere ist es Aufgabe der vorliegenden Erfindung eine Beleuchtungsanordnung zu entwickeln, bei der eine möglichst homogene Lichtabgabe über mindestens eine der Flachseiten des flächigen Lichtleiters möglich ist.

Die Aufgabe der vorliegenden Erfindung wird durch eine Beleuchtungsanordnung gemäß Anspruch 1 gelöst. Die abhängigen Ansprüche bilden den Kerngedanken der vorliegenden Erfindung vorteilhaft weiter.

Die vorliegende Erfindung betrifft eine Beleuchtungsanordnung mit mindestens einer Lichtquelle, insbesondere eine LED, und einem flächigen Lichtleiter zur Lichtabgabe über mindestens eine der Flachseiten des flächigen Lichtleiters, wobei die Beleuchtungsanordnung mindestens einen weiteren Lichtleiter aufweist, der an einer der Schmalseiten beziehungsweise der Stirnseiten des flächigen Lichtleiters angeordnet ist. Die Lichtquelle ist dabei an einer der Stirnseiten des weiteren Lichtleiters derart angeordnet, dass das Licht der Lichtquelle über die Stirnseite in den weiteren Lichtleiter eingekoppelt wird, wobei an der dem flächigen Lichtleiter zugewandten Seite des weiteren Lichtleiters mehrere Strukturen zum Auskoppeln des Lichts aus dem weiteren Lichtleiter vorgesehen sind, wobei jede der Strukturen eine Bodenfläche und Mantelflächen aufweist, wobei die Bodenfläche dem flächigen Lichtleiter zugewandt ist, wobei sich die Mantelflächen seitlich an die Bodenfläche in Richtung des weiteren Lichtleiters anschließen und wobei das über die Strukturen zum Auskoppeln ausgekoppelte Licht über die Schmalseite bzw. die Stirnseite in den flächigen Lichtleiter eingekoppelt wird. Hierbei sind die Strukturen zum Auskoppeln derart ausgestaltet, dass das Licht, welches aus dem weiteren Lichtleiter in eine der Strukturen zum Auskoppeln eintritt, reflektiert wird, wenn es auf die Bodenfläche einer Struktur zum Auskoppeln trifft, und ausgekoppelt wird, wenn es auf die Mantelfläche der Struktur zum Auskoppeln trifft.

Erfindungsgemäß ist also nunmehr vorgesehen, dass die Lichtquellen beziehungsweise die LEDs nicht mehr unmittelbar an einer der Schmalseiten beziehungsweise Stirnseiten des flächigen Lichtleiters angeordnet sind. Vielmehr befindet sich dort ein weiterer Lichtleiter, durch den erreicht wird, dass das von den Lichtquellen beziehungsweise LEDs abgegebene Licht bereits beim Einkoppeln über die Schmalseite beziehungsweise Stirnseite in den flächigen Lichtleiter bereits ganz oder zumindest teilweise durchmischt und gleichmäßig verteilt ist, wodurch ein möglichst gleichmäßiges Einkoppeln des Lichts in den flächigen Lichtleiter erreicht wird.

Des Weiteren kann auch vorgesehen sein, dass der weitere Lichtleiter derart ausgestaltet ist, dass das von der Lichtquelle über die Stirnseite eingekoppelte Licht in Längsrichtung in dem weiteren Lichtleiter verteilt wird.

In Einzelnen wird dies dadurch erreicht, dass das von der Lichtquelle abgegebene und an einer der Stirnseiten des weiteren Lichtleiters eingekoppelte Licht aufgrund von entsprechenden Totalreflexionen innerhalb des weiteren Lichtleiters durch den weiteren Lichtleiter geleitet wird und daher nicht an einer der Oberflächen des weiteren Lichtleiters austritt. In die Strukturen zum Auskoppeln kann das Licht allerdings eintreten und dann durch diese Strukturen entsprechend austreten und somit aus dem weiteren Lichtleiter ausgekoppelt werden. Hierbei wird ähnlich wie bei dem flächigen Lichtleiter auch bei dem weiteren Lichtleiter das Licht innerhalb des weiteren Lichtleiters bereits durchmischt, während es durch den weiteren Lichtleiter geleitet wird.

Somit ist gewährleistet, dass das Licht beim Verlassen des weiteren Lichtleiters über die Strukturen zum Auskoppeln bereits durchmischt und weitestgehend gleichmäßig verteilt ist. Dieses im Wesentlichen gleichmäßig verteilte und durchmischte Licht kann dann über die Schmalseiten beziehungsweise Stirnseiten in den flächigen Lichtleiter eintreten beziehungsweise wird entsprechend eingekoppelt. Das heißt, im Gegensatz zum Stand der Technik, bei dem an der Schmalseite beziehungsweise Stirnseite des flächigen Lichtleiters punktförmige Lichtquellen angeordnet sind, die zu den entsprechenden oben erwähnten Nachteilen führen, ist bei der vorliegenden Erfindung vorgesehen, dass das über die Schmalseiten beziehungsweise Stirnseiten eintretende Licht bereits entsprechend durchmischt und gleichmäßig verteilt ist.

Dies führt beispielsweise dazu, dass bei der Lichtabgabe über die Flachseiten des flächigen Lichtleiters keine Inhomogenitäten mehr hinsichtlich der Lichtfarbe beziehungsweise Farbtemperatur auftreten. Zu beachten ist dabei auch, dass das von dem weiteren Lichtleiter abgegebene und über die Schmalseiten beziehungsweise Stirnseiten in den flächigen Lichtleiter eingekoppelte Licht zusätzlich auch nach wie vor noch innerhalb des flächigen Lichtleiters weiterhin wie bisher durchmischt wird, so dass selbst für den Fall, dass der weitere Lichtleiter kein vollständig durchmischtes und vollständig gleichmäßig verteiltes Licht abgibt, gewährleistet werden kann, dass das von den Flachseiten beziehungsweise einer der Flachseiten des flächigen Lichtleiters abgegebene Licht homogen in der Lichtfarbwiedergabe beziehungsweise Farbtemperaturwiedergabe ist. Ähnliches gilt dann auch für die Verteilung der Helligkeit bei der Lichtabgabe, wobei auch hier durch die erfindungsgemäße Lösung erreicht wird, dass keine Inhomogenitäten, die aufgrund der Anordnung von punktuellen Lichtquellen entlang einer der Schmalseiten beziehungsweise Stirnseiten des flächigen Lichtleiters entstehen würden, vorhanden sind.

Vorteilhafterweise ist vorgesehen, dass der weitere Lichtleiter schmal und länglich ausgebildet ist und/oder im Querschnitt im Wesentlichen rechteckförmig ausgebildet ist.

Hierdurch besteht dann die Möglichkeit, dass sich der weitere Lichtleiter über die gesamte Länge der Schmalseite beziehungsweise der Stirnseite des flächigen Lichtleiters erstreckt, an der er angeordnet ist.

Des Weiteren kann vorgesehen sein, dass die Anordnung mehrere Lichtquellen aufweist, wobei dann an beiden Stirnseiten des weiteren Lichtleiters Lichtquellen angeordnet sein können. Außerdem ist es hierbei auch möglich, dass die Beleuchtungsanordnung mehrere weitere Lichtleiter aufweist, wobei jeder der weiteren Lichtleiter jeweils mindestens eine Lichtquelle an einer seiner Stirnseiten aufweist. Dabei kann vorgesehen sein, dass an zwei gegenüberliegenden Schmalseiten beziehungsweise Stirnseiten des flächigen Lichtleiters weitere Lichtleiter angeordnet sind. Ebenso wäre es aber auch möglich, dass an drei oder mehrere Schmalseiten beziehungsweise Stirnseiten des flächigen Lichtleiters weitere Lichtleiter angeordnet sind.

Außerdem kann vorgesehen sein, dass die Strukturen zum Auskoppeln unmittelbar an der Schmalseite beziehungsweise der Stirnseite des flächigen Lichtleiters anliegen, an der der weitere Lichtleiter angeordnet ist. Dabei kann zwischen den Strukturen zum Auskoppeln und der Schmalseite beziehungsweise der Stirnseite des flächigen Lichtleiters ein Übergangsmaterial, beispielsweise Silikon vorgesehen sein, wobei durch das Übergangsmaterial insbesondere der Übergang des Lichts von dem weiteren Lichtleiter in den flächigen Lichtleiter unterstützt wird. Ebenso wäre es auch möglich, dass der gesamte flächige Lichtleiter aus Silikon besteht.

Alternativ kann aber auch vorgesehen sein, dass die Strukturen zum Auskoppeln beabstandet von der Schmalseite beziehungsweise der Stirnseite des flächigen Lichtleiters, an der der weitere Lichtleiter angeordnet ist, angeordnet sind.

Zusätzlich kann auch vorgesehen sein, dass die Strukturen zum Auskoppeln zylinderförmig, quaderförmig oder kegelstumpfförmig ausgebildet sind. Die Strukturen zum Auskoppeln sind derart ausgestaltet, dass das Licht erfindungsgemäß über die Mantelflächen beziehungsweise Umfangsflächen der Strukturen ausgekoppelt wird.

Bei den Strukturen zum Auskoppeln kann es sich bspw. um vertiefende Strukturen handeln. Ebenso kann es sich bei den Strukturen zum Auskoppeln auch um erhabene Strukturen handeln, die das Licht senkrecht zur Schmalseite beziehungsweise Stirnseite des flächigen Lichtleiters vorbündeln, wobei diese Strukturen dann derart ausgestaltet sein können, dass jeweils die Fläche der Strukturen, welche direkt beziehungsweise unmittelbar mit dem weiteren Lichtleiter verbunden ist kleiner ist als die Fläche, welche zum flächigen Lichtleiter zeigt. Hierdurch ergibt sich dann bspw. eine kegelstumpfförmige Ausgestaltung.

Durch eine kegelstumpfförmige Ausgestaltung der Strukturen zum Auskoppeln kann des Weiteren beispielsweise auch noch erreicht werden, dass durch die entsprechende Neigung der Umfangsflächen beziehungsweise Mantelflächen der Strukturen zusätzlich der Winkelbereich, in dem Licht in den flächigen Lichtleiter eintritt, beeinflusst wird, um beispielsweise in einer bestimmten Richtung die Entblendung zusätzlich zu optimieren.

Durch die Strukturen zum Auskoppeln ergibt sich des Weiteren noch der Vorteil, dass, insbesondere für den Fall, dass die Strukturen zum Auskoppeln beabstandet zu dem flächigen Lichtleiter angeordnet sind und die Lichtauskopplung erfindungsgemäß über die Mantelflächen beziehungsweise Umfangsflächen der Strukturen zum Auskoppeln erfolgt, das in den flächigen Lichtleiter eintretende Licht bereits nur unter bestimmten Winkelbereichen in diesen eintreten kann. Auch dies trägt zu einer besseren Durchmischung und insgesamt homogeneren Lichtabgabe über den flächigen Lichtleiter bei.

Des Weiteren kann vorgesehen sein, dass die mehreren Strukturen zum Auskoppeln den gleichen Abstand zueinander aufweisen oder dass der Abstand zwischen den mehreren Strukturen zum Auskoppeln variiert.

Die Freiheiten bei der Positionierung der Strukturen zum Auskoppeln ergeben sich unter anderem durch die Anordnung der Lichtquelle an einer der Stirnseiten des weiteren Lichtleiters. Hierdurch kann der Abstand der Strukturen zum Auskoppeln zueinander im Prinzip unabhängig von der Leistung der LEDs gewählt werden, um eine gleichmäßige Lichteinkopplung über die gesamte Schmalseite beziehungsweise Stirnseite des flächigen Lichtleiters hin zu erzielen.

So besteht beispielsweise für den Fall, dass Lichtquellen an beiden gegenüberliegenden Stirnseiten des weiteren Lichtleiters angeordnet werden, die Möglichkeit, dass über dessen gesamte Länge hinweg ein gleichmäßiger Abstand zwischen den Strukturen zum Auskoppeln gewählt wird. Ebenso wäre es aber auch denkbar, dass der Abstand über die Länge des weiteren Lichtleiters hinweg variiert wird, um gezielt entweder eine gleichmäßigere Lichtabgabe beziehungsweise Lichteinkopplung in den flächigen Lichtleiter zu erzielen oder Variationen in der Lichteinkopplung hervorzurufen.

Vorteilhafterweise kann des Weiteren noch vorgesehen sein, dass die Beleuchtungsanordnung einen oder mehrere Reflektoren aufweist, der/die derart angeordnet ist/sind, dass der wesentliche Teil des von der Lichtquelle abgegebenen Lichts in den weiteren Lichtleiter eingekoppelt und über die Strukturen zum Auskoppeln aus dem weiteren Lichtleiter ausgekoppelt und in den flächigen Lichtleiter eingekoppelt wird.

Außerdem besteht auch die Möglichkeit, dass Ausnehmungen oder andere Strukturen an der der Schmalseite beziehungsweise Stirnseite des flächigen Lichtleiters angeordnet sind, die mit den Strukturen zum Auskoppeln korrespondieren beziehungsweise mit diesen entsprechend zusammenwirken. Die Strukturen zum Auskoppeln können bspw. in derartige Strukturen, die an der Schmalseite beziehungsweise Stirnseite des flächigen Lichtleiters angeordnet sind, hineinstehen beziehungsweise hineinragen für den Fall, dass es sich um entsprechende Ausnehmungen handelt.

Insgesamt bringt die vorliegende Erfindung den Vorteil mit sich, dass das an einer der Schmalseiten beziehungsweise Stirnseiten in den flächigen Lichtleiter eingekoppelte Licht bereits weitestgehend durchmischt ist und gleichmäßiger über die gesamte Länge verteilt ist. Hierdurch wird erreicht, dass die Lichtabgabe über die Flachseiten oder eine der Flachseiten des flächigen Lichtleiters insgesamt homogener erfolgt.

Die vorliegende Erfindung wird im Folgenden mit Bezug auf die anhängigen Figuren detaillierter beschrieben:
- Figur 1: zeigt schematisch eine erfindungsgemäße Beleuchtungsanordnung in einer Draufsicht bezüglich des flächigen Lichtleiters;
- Figur 2: zeigt in seitlicher Ansicht bezüglich des flächigen Lichtleiters eine Schnittdarstellung der in Fig. 1 gezeigten erfindungsgemäßen Beleuchtungsanordnung;
- Figur 3: zeigt wiederum eine seitliche Schnittdarstellung mit einem in Vergleich zu Fig. 2 anderen, weiteren Lichtleiter;
- Figur 4: zeigt wiederum eine seitliche Schnittdarstellung mit einem in Vergleich zu Fig. 2 unmittelbar an dem flächigen Lichtleiter angeordneten weiteren Lichtleiter;
- Figur 5: zeigt die in Fig. 1 gezeigte erfindungsgemäße Beleuchtungsanordnung zusätzlich mit einem Reflektor;
- Figur 6: zeigt in seitlicher Ansicht bezüglich des flächigen Lichtleiters eine Schnittdarstellung der in Fig. 5 gezeigten erfindungsgemäßen Beleuchtungsanordnung;
- Figur 7: zeigt wiederum eine seitliche Ansicht einer Schnittdarstellung einer nicht erfindungsgemäßen Variante, bei der im Gegensatz zu Fig. 6 der weitere Lichtleiter unmittelbar an dem flächigen Lichtleiter angeordnet ist.

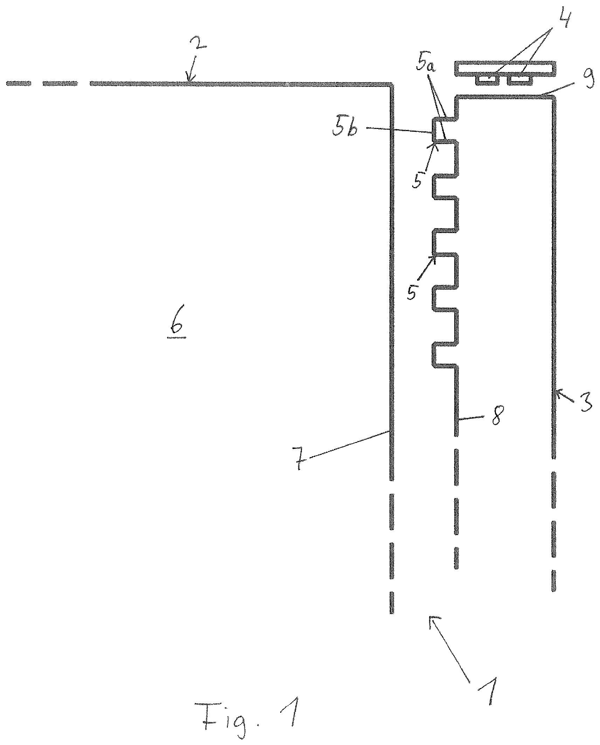

In Fig.1 ist eine erfindungsgemäße Beleuchtungsanordnung 1 gezeigt, die zum einen eine flächige Lichtleiterplatte beziehungsweise einen flächigen Lichtleiter 2 und zum anderen einen weiteren Lichtleiter 3 umfasst.

Bei dem flächigen Lichtleiter 2 kann es sich, wie zuvor erläutert, um eine bereits bekannte Lichtleiterplatte beziehungsweise einen bereits bekannten Lichtleiter handeln, der beispielsweise als herkömmlichen Lichtwellenleiter ausgebildet ist, in dem Licht zumindest in einem Wellenlängenbereich von etwa 400nm bis etwa 700nm an einigen der Innenflächen eine Totalreflexion erfährt und sich somit innerhalb des flächigen Lichtleiters 2 ausbreiten und durchmischen kann. Zusätzlich ist bei einem derartigen flächigen Lichtleiter 2 dann auch vorgesehen, dass über mindestens eine Flachseite 6 das Licht aus dem flächigen Lichtleiter 2 ausgekoppelt beziehungsweise ausgegeben und abgestrahlt wird.

Bei dem flächigen Lichtleiter 2 kann es sich beispielsweise um eine dünne beziehungsweise schmale, flache Platte handeln, die im Querschnitt rechteckförmig ausgebildet ist. Wie sich auch aus Fig. 1 ergibt, handelt es sich bei der zur Lichtabgabe vorgesehenen Fläche 6 um eine der großen Flachseiten des plattenförmig ausgestalteten flächigen Lichtleiters 2. Zusätzlich weist der flächige Lichtleiter 2 dann noch Schmalseiten beziehungsweise Stirnseiten 7 auf, die jeweils die Flachseiten 6 miteinander verbinden.

Bisher war es nunmehr vorgesehen, dass an diesen Schmalseiten beziehungsweise Stirnseiten 7 eines flächigen Lichtleiters 2 zwei entsprechende Lichtquellen, insbesondere LEDs, angeordnet sind, wobei das Licht dieser Lichtquellen unmittelbar über die Schmalseiten beziehungsweise Stirnseiten 7 des flächigen Lichtleiters 2 in diesen eingekoppelt wird, d.h. bei den Schmalseiten beziehungsweise Stirnseiten 7 handelt es sich somit um Einkoppelflächen des flächigen Lichtleiters 2. Hierbei können sich jedoch Inhomogenitäten insbesondere bezüglich der Farbe beziehungsweise Farbtemperatur und/oder der Helligkeit des über die Flachseite 6 abgegebenen Lichts ergeben, da die unmittelbar an den Schmalseiten beziehungsweise Stirnseiten 7 angeordneten Lichtquellen zumeist punktuelle Lichtquellen sind und somit das Licht lediglich punktuell in die Schmalseiten beziehungsweise Stirnseiten 7 eingekoppelt wird.

Um diese Probleme zu umgehen, ist erfindungsgemäß mindestens ein weiterer Lichtleiter 3 vorgesehen, der an einer der Schmalseiten beziehungsweise Stirnseiten 7 des flächigen Lichtleiters 2 angeordnet ist.

Anstelle der Anordnung einer oder mehrerer Lichtquellen entlang der Schmalseiten beziehungsweise Stirnseiten 7 des flächigen Lichtleiters 2 sind nunmehr eine oder mehrere Lichtquellen 4 an mindestens einer der Stirnseiten 9 des weiteren Lichtleiters 3 angeordnet. Das Licht der Lichtquellen 4 wird dann über diese Stirnseite 9 in den weiteren Lichtleiter 3 eingekoppelt, wobei es sich, ähnlich wie bei dem flächigen Lichtleiter 2, bei dem weiteren Lichtleiter 3 beispielsweise um einen Lichtwellenleiter handeln kann, in dem Licht zumindest in einem Wellenlängenbereich von etwa 400nm bis etwa 700nm eine Totalreflexion erfährt und somit in Längsrichtung entlang der Ausdehnungsrichtung des weiteren Lichtleiters 3 in den weiteren Lichtleiter 3 geleitet und verteilt wird. Hierbei wird das von den Lichtquellen 4 abgegebene und durch die Stirnseite 9 in den weiteren Lichtleiter 3 eingekoppelte Licht möglichst weitgehend durchmischt und gleichmäßig verteilt.

Bei den Leuchtmitteln beziehungsweise Lichtquellen 4 kann sich bspw. um LEDs oder auch OLEDs handeln.

Der flächige Lichtleiter 2 und auch der weitere Lichtleiter 3 können beispielsweise aus Glas, Acryl, Polykarbonaten, Polyester oder Silikon hergestellt sein.

Zur Lichtabgabe weist der weitere Lichtleiter 3 dann Strukturen 5 zum Auskoppeln des Lichts auf, die an der dem flächigen Lichtleiter 2 zugewandten Seite 8 des weiteren Lichtleiters 3 vorgesehen sind. Das heißt, die Strukturen 5 zum Auskoppeln sind in Richtung der Schmalseiten beziehungsweise Stirnseiten 7 des flächigen Lichtleiters 2 gerichtet. Jede Struktur 5 zum Auskoppeln weist in Figur 1 eine Bodenfläche 5b auf, die dem flächigen Lichtleiter 2 zugewandt ist. Die Bodenflächen 5b bilden dann zusammen mit entsprechenden Flanken 5a, die die Umfangsflächen bzw. Mantelflächen bilden, die Strukturen 5 zum Auskoppeln, wobei sich die Flanken 5a seitlich an die Bodenflächen 5b in Richtung des weiteren Lichtleiters 3 anschließen.

Die Strukturen 5 zum Auskoppeln des Lichts sind insbesondere auf einer äußeren Oberfläche des weiteren Lichtleiters 3, welche der Seite 8 entspricht, angeordnet. Licht kann aufgrund der Totalreflexion an dieser Oberfläche (genauer gesagt an der Innenfläche, die der Oberfläche entspricht) des weiteren Lichtleiters 3 nicht zwischen den Strukturen 5 zum Auskoppeln des Lichts austreten, kann aber durch die Strukturen 5 zum Auskoppeln des Lichts aus dem weiteren Lichtleiter 3 ausgekoppelt werden.

Die Strukturen 5 können dabei, wie beispielsweise in Fig. 1 gezeigt, zylinderartig ausgestaltet sein, wobei die Strukturen 5 zum Auskoppeln des Lichts und der weitere Lichtleiter 3 einteilig gefertigt sein können.

Alternativ hierzu wäre es aber auch möglich, dass die Strukturen 5 zum Auskoppeln des Lichts mit dem weiteren Lichtleiter 3 optisch gekoppelt beispielsweise daran angeklebt sind. Der weitere Lichtleiter 3 kann dann lichtdurchlässige Abschnitte oberhalb jeder Struktur 5 zum Auskoppeln des Lichts aufweisen. Die Strukturen 5 zum Auskoppeln des Lichts können aus demselben Material wie der weitere Lichtleiter 3 sein beziehungsweise können aus einem Material gefertigt sein, das transparent ist, beispielsweise einem Polymer, wobei die Bodenfläche 5b mit einer reflektierenden Schicht versehen sein kann. Die Strukturen 5 zum Auskoppeln des Lichts können aber auch aus lichtdurchlässigen und reflektierenden Teilen zusammengesetzt sein.

Die Strukturen 5 zum Auskoppeln können aber auch bspw. quaderartig, würfelartig oder kegelstumpfartig ausgebildet sein, wobei verschiedene Formen der Strukturen 5 zum Auskoppeln des Lichts auch miteinander kombiniert werden können.

Erfindungsgemäß kann hierbei vorgesehen sein, dass die Bodenflächen 5b mit einer reflektierenden Schicht versehen sind, so dass Licht, das aus dem weiteren Lichtleiter 3 in eine der Strukturen 5 zum Auskoppeln des Lichts eintritt, dann ausgekoppelt, falls es auf eine Seitenwand, das heißt, eine Flanke 5a einer Struktur 5 zum Auskoppeln des Lichts, trifft. Das Licht, das auf die Bodenfläche 5b trifft, wird dagegen reflektiert, vorzugsweise derart, dass es in den weiteren Lichtleiter 3 zurückgeleitet wird. Das in dem weiteren Lichtleiter 3 verbleibende Licht kann zu einem späteren Zeitpunkt durch eine der Strukturen 5 zum Auskoppeln des Lichts austreten, falls es auf deren Flanke 5a trifft. Sind die Strukturen 5 einteilig mit dem weiteren Lichtleiter 3 ausgebildet, so erfährt das Licht eine Totalreflexion an den Bodenflächen 5b, da diese vorzugsweise, wie in Fig. 1 gezeigt, parallel zu der Oberfläche des weiteren Lichtleiters, die der Seite 8 des weiteren Lichtleiters entspricht, sind.

Das über die Strukturen 5 zum Auskoppeln des Lichts abgegebene beziehungsweise ausgekoppelte Licht wird dann über die Schmalseiten beziehungsweise Stirnseiten 7 des flächigen Lichtleiters 2 in diesen eingekoppelt, wobei dann, wie bereits auch bisher, innerhalb des flächigen Lichtleiters 2 eine weitere Durchmischung und gleichmäßige Verteilung des Lichts erfolgt.

Durch die vorteilhafte Ausgestaltung mit dem weiteren zusätzlichen Lichtleiter 3 wird nun erreicht, dass das an den Schmalseiten beziehungsweise Stirnseiten 7 des flächigen Lichtleiters 2 anliegende Licht bereits deutlich besser gleichmäßig verteilt und besser durchmischt ist, in Vergleich zu einzelnen unmittelbar an den Schmalseiten beziehungsweise Stirnseiten 7 angeordneten Lichtquellen. Hierdurch wird dann erreicht, dass das von dem flächigen Lichtleiter 2 über die Flachseite 6 abgegebene Licht weniger Inhomogenitäten bezüglich der Helligkeit und der Farbdurchmischung aufweist.

Bei der in Fig. 1 gezeigten erfindungsgemäßen Beleuchtungsanordnung ist des Weiteren noch zu erwähnen, dass es sich insbesondere um einen schmalen und länglichen weiteren Lichtleiter 3 handelt, der im Querschnitt im Wesentlichen rechteckförmig ausgebildet ist. Zusätzlich erstreckt sich der weitere Lichtleiter 3 auch über die gesamte Länge der Schmalseite beziehungsweise Stirnseite 7 des flächigen Lichtleiters 2, an der er angeordnet ist.

Aus Fig. 1 geht auch noch hervor, dass die Strukturen 5 zum Auskoppeln des Lichts beabstandet von der Schmalseite beziehungsweise der Stirnseite 7 des flächigen Lichtleiters 2, an der der weitere Lichtleiter 3 angeordnet ist, angeordnet sind. Das heißt, dass auch der weitere Lichtleiter 3 beabstandet angeordnet ist. Insbesondere in diesem Fall ist dann die zuvor bereits beschriebene Ausgestaltung vorgesehen, dass die Bodenflächen 5b der Strukturen 5 zum Auskoppeln des Lichts reflektierend ausgestaltet sind und das Licht über die Flanken 5a der Strukturen zum Auskoppeln des Lichts nach außen abgegeben beziehungsweise ausgekoppelt wird. Somit wird bei der zylinderförmigen Ausgestaltung der Strukturen 5 zum Auskoppeln des Lichts das Licht über die Mantelflächen der Strukturen 5 zum Auskoppeln des Lichts ausgekoppelt.

Durch die erfindungsgemäße Abgabe des Lichts nur über die Flanken 5a beziehungsweise Mantelflächen der Strukturen 5 zum Auskoppeln des Lichts und auch durch den Abstand zwischen den Strukturen 5 zum Auskoppeln des Lichts und dem flächigen Lichtleiter 2 wird erreicht, dass das in den flächigen Lichtleiter 2 eintretende Licht bereits nur unter bestimmten Winkelbereichen in diesen eintreten kann. Auch dies trägt zu einer besseren Durchmischung und insgesamt homogeneren Lichtabgabe über den flächigen Lichtleiter 2 bei.

Je nach gewünschtem Ergebnis wäre es aber auch denkbar, dass in Fig. 1 nicht die Bodenflächen 5b sondern die Flanken 5a (was jedoch nicht Teil der Ansprüche ist) oder keine der Flächen der Strukturen 5 zum Auskoppeln des Lichts reflektierend ausgestaltet sind. Eine solche Ausgestaltung wäre allerdings nicht von den Ansprüchen abgedeckt.

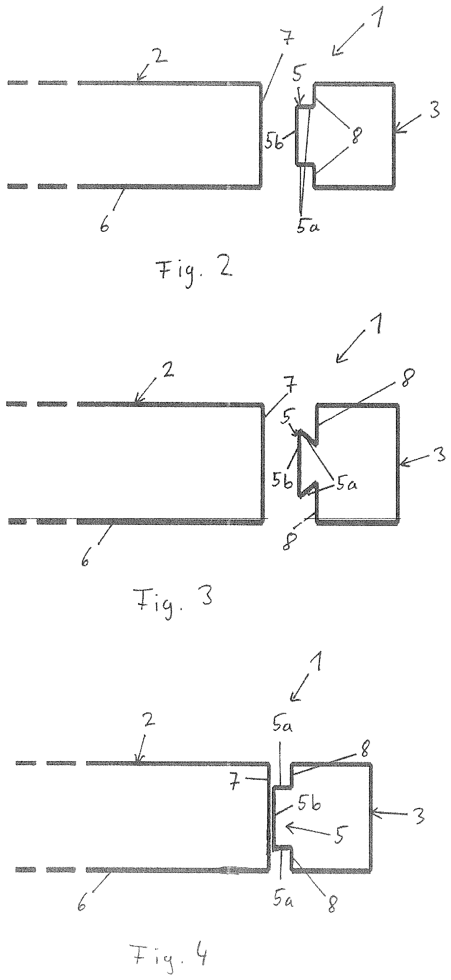

In Fig. 2 ist dann eine seitliche Schnittansicht der in Fig. 1 gezeigten erfindungsgemäßen Beleuchtungsanordnung dargestellt, wobei auch Fig. 2 entnommen werden kann, dass es sich bei den Strukturen 5 zum Auskoppeln des Lichts beispielsweise um zylinderartig ausgestaltete Strukturen 5 handeln kann.

In Fig. 3 ist ähnlich wie in Fig. 2 wiederum eine seitliche Schnittansicht gezeigt, wobei sich diese von der in Fig. 2 dahingehend unterscheidet, dass die Strukturen 5 zum Auskoppeln des Lichts, die an dem weiteren Lichtleiter 3 angeordnet sind, nicht zylinderartig sondern vielmehr kegelstumpfartig ausgestaltet beziehungsweise ausgebildet sind. Durch die entsprechende Neigung der Umfangsflächen beziehungsweise Flanken 5a der Strukturen 5 zum Auskoppeln des Lichts kann zusätzlich der Winkelbereich, in den Licht in den flächigen Lichtleiter 2 eintritt, beeinflusst werden, um beispielsweise in einer bestimmten Richtung die Entblendung zusätzlich zu optimieren. Je nach gewünschtem Winkelbereich wären auch noch andere Formen beziehungsweise Ausgestaltungen der Strukturen 5 zum Auskoppeln des Lichts denkbar.

Sowohl in Fig. 2 als auch in Fig. 3 sind, wie auch in Fig. 1, die Strukturen 5 zum Auskoppeln des Lichts beabstandet von dem flächigen Lichtleiter angeordnet. Demgegenüber ist in Fig. 4 eine seitliche Schnittansicht gezeigt, bei der die in diesem Fall wiederum zylinderförmig ausgestalteten Strukturen 5 zum Auskoppeln des Lichts unmittelbar an der Schmalseite beziehungsweise der Stirnseite 7 des flächigen Lichtleiters 2 anliegen, an der der weitere Lichtleiter 3 angeordnet ist. Bei einer nicht erfindungsgemäßen Variante ist dann zwischen den Strukturen 5 zum Auskoppeln des Lichts und der Schmalseite beziehungsweise der Stirnseite 7 des flächigen Lichtleiters ein Übergangsmaterial, beispielsweise Silikon, vorgesehen, welches einen Lichtübertritt von den Strukturen 5 zum Auskoppeln des Lichts in die Schmalseite beziehungsweise Stirnseite 7 des flächigen Lichtleiters 2 ermöglicht. Das Übergangsmaterial ist dann insbesondere zwischen der Bodenfläche 5b der Strukturen 5 zum Auskoppeln des Lichts vorgesehen.

Bei der Anordnung der Strukturen 5 zum Auskoppeln des Lichts unmittelbar an der Schmalseite beziehungsweise der Stirnseite 7 des flächigen Lichtleiters 2 ist bei einem nicht erfindungsgemäßen Beispiel vorgesehen, dass die Bodenflächen 5b der Strukturen 5 zum Auskoppeln des Lichts lichtdurchlässig ausgestaltet sind und demgegenüber die Flanken 5a beziehungsweise Mantelflächen der Strukturen 5 zum Auskoppeln des Lichts reflektierend ausgestaltet sind. Alternativ hierzu kann vorgesehen sein, dass keine der Flächen 5a und 5b reflektierend ausgestaltet sind, oder dass entsprechend einer erfindungsgemäßen Variante die Bodenflächen 5b reflektierend ausgestaltet sind und die Flanken 5a nicht.

Des Weiteren ist auch noch anzumerken, dass die Bodenflächen 5b auch unmittelbar ohne Übergangsmaterial an der Schmalseite beziehungsweise der Stirnseite 7 des flächigen Lichtleiters 2 anliegen können, was eine nicht erfindungsgemäße Variante darstellt, oder dass ein minimaler Luftspalt zwischen den beiden Flächen besteht.

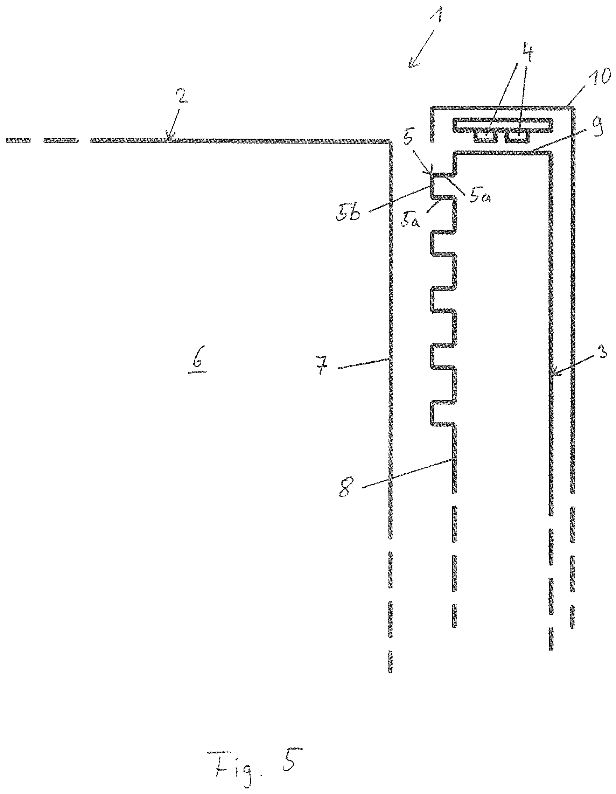

In Fig. 5 ist dann eine weitere erfindungsgemäße Beleuchtungsanordnung gezeigt. Diese entspricht im Wesentlichen der in Fig. 1 gezeigten Beleuchtungsanordnung. Zusätzlich weist die in Fig. 5 gezeigte erfindungsgemäße Beleuchtungsanordnung dann jedoch noch einen Reflektor 10 auf, der derart ausgestaltet und an dem weiteren Lichtleiter 3 und den Lichtquellen 4 angeordnet ist, dass der wesentliche Teil des von der Lichtquelle beziehungsweise den Lichtquellen 4 abgegebenen Lichts zum einen in den weiteren Lichtleiter 3 eingekoppelt wird und zum anderen über die Strukturen 5 zum Auskoppeln des Lichts aus dem weiteren Lichtleiter 3 ausgekoppelt wird und dann über die Schmalseite beziehungsweise Stirnseite 7 des flächigen Lichtleiters 2 in den flächigen Lichtleiter 2 eingekoppelt wird.

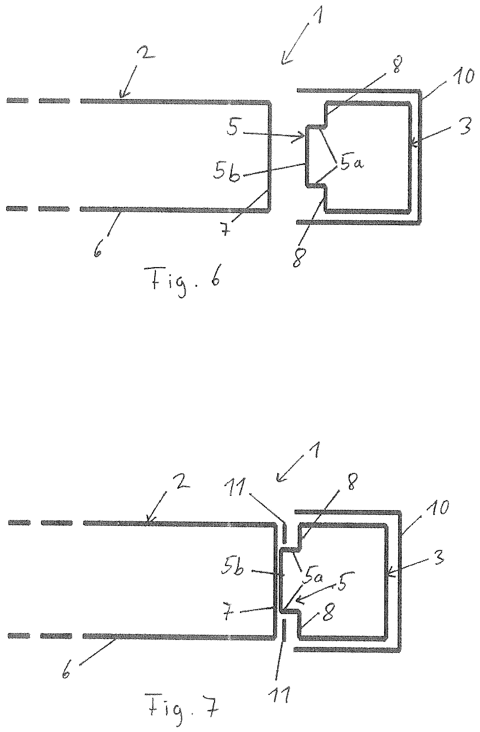

Fig. 6 zeigt dann eine seitliche Schnittdarstellung der in Fig. 5 gezeigten Beleuchtungsanordnung, wobei die dort gezeigte Ausgestaltung im Wesentlichen der in Fig. 2 entspricht. Der einzige Unterschied besteht darin, dass hier, wie auch in Fig. 5, der Reflektor 10 zusätzlich angeordnet ist.

In Fig. 7 ist eine weitere nicht erfindungsgemäße Variante in seitlicher Schnittdarstellung gezeigt, bei der der weitere Lichtleiter 3, im Gegensatz zu den Ausführungen in Fig. 5 und 6, bei denen die Struktur 5 zum Auskoppeln des Lichts beabstandet von dem flächigen Lichtleiter 2 angeordnet sind, unmittelbar an dem flächigen Lichtleiter 2 angeordnet ist, beziehungsweise wiederum die Strukturen 5 zum Auskoppeln des Lichts unmittelbar an der Schmalseite beziehungsweise der Stirnseite 7 des flächigen Lichtleiters 2, wie dies auch schon in Fig. 4 gezeigt ist, anliegen.

Wie auch in Fig. 6 ist auch in Fig. 7 ein Reflektor 10 vorgesehen, der den weiteren Lichtleiter 3 umgibt. Zusätzlich sind dann noch weitere Reflektoren 11 vorgesehen, die, wie aus Fig. 7 ersichtlich, im Bereich der Strukturen 5 zum Auskoppeln des Lichts und genauer seitlich neben den Flanken 5a der Strukturen 5 zum Auskoppeln des Lichts in der Nähe beziehungsweise an der Schmalseite beziehungsweise Stirnseite 7 des flächigen Lichtleiters 2 angeordnet sind. Hierdurch wird eine noch weitere Verbesserung bezüglich der Auskopplung des Lichts über die Strukturen 5 zum Auskoppeln und bezüglich der Einkopplung über die Schmalseite beziehungsweise Stirnseite 7 erreicht.

In diesem nicht erfindungsgemässen Fall ist vorgesehen, dass die Bodenflächen 5b der Strukturen 5 zum Auskoppeln des Lichts lichtdurchlässig und die Flanken 5a reflektierend ausgestaltet sind. Durch diese Ausgestaltung und die zusätzlichen Reflektoren 11 kann dann erreicht werden, dass im Wesentlichen das gesamte von den Strukturen 5 zum Auskoppeln abgegebene Licht auf die Schmalseite beziehungsweise Stirnseite 7 des flächigen Lichtleiters 2 gelenkt und somit in den flächigen Lichtleiter 2 eingekoppelt wird und zum anderen das innerhalb des flächigen Lichtleiters 2 wieder auf die Schmalseite beziehungsweise Stirnseite 7 zurückreflektierte Licht nicht über Bereiche der Schmalseite beziehungsweise Stirnseite 7, die nicht von den Bodenflächen 5b der Strukturen 5 zum Auskoppeln des Lichts bedeckt sind, aus dem flächigen Lichtleiter 2 austreten kann.

Zusätzlich ist dann auch noch anzumerken, dass die zu den Figuren 1 bis 4 gemachten Anmerkungen soweit anwendbar selbstverständlich auch für die Ausgestaltungen in den Figuren 5 bis 7 gelten, beispielsweise bezüglich einer reflektierenden Schicht an den Bodenflächen 5b oder den Flanken 5a der Strukturen 5 zum Auskoppeln des Lichts oder der Ausgestaltung der Form der Strukturen 5 zum Auskoppeln des Lichts oder auch im Hinblick auf Fig. 7, die Anmerkungen zu Anspruch 4 bezüglich der unmittelbaren Anordnung der Strukturen 5 zum Auskoppeln des Lichts an der Schmalseite beziehungsweise Stirnseite 7 und der möglichen Verwendung eines Übergangsmaterials.

Des Weiteren ist zu beachten, dass in den Figuren 1 bis 7 jeweils ein weiterer Lichtleiter 3 gezeigt ist, der an einer der Schmalseiten beziehungsweise Stirnseiten 7 des flächigen Lichtleiters 2 angeordnet ist. Ebenso wäre es aber auch möglich, dass die Anordnung mehrere weitere Lichtleiter 3 aufweist, wobei an jedem der weiteren Lichtleiter 3 jeweils mindestens eine Lichtquelle 4 an einer seiner Stirnseiten 9 angeordnet ist. Diesbezüglich ist noch anzumerken, dass die Anordnung eine Vielzahl von Lichtquellen 4 aufweisen kann, wobei diese, sowohl für den Fall, dass nur ein weiterer Lichtleiter 3 vorgesehen ist als auch für den Fall, dass mehrere weitere Lichtleiter 3 vorgesehen sind, an beiden Stirnseiten 9 des weiteren Lichtleiters 3 beziehungsweise der mehreren Lichtleiter 3 angeordnet sein können.

Für den Fall, dass mehrere weitere Lichtleiter 3 vorgesehen sind, kann dann auch vorgesehen sein, dass nur ein Teil der weiteren Lichtleiter 3 an beiden Stirnseiten 9 Lichtquellen aufweist.

Bei mehreren weiteren Lichtleitern 3 kann es des Weiteren vorgesehen sein, dass an zwei gegenüberliegenden Schmalseiten beziehungsweise Stirnseiten 7 des flächigen Lichtleiters 2 weitere Lichtleiter 3 angeordnet sind. Ebenso könnte es aber auch vorgesehen sein, dass an drei oder mehreren Schmalseiten beziehungsweise Stirnseiten 7 des flächigen Lichtleiters 2 weitere Lichtleiter 3 angeordnet sind.

Denkbar wäre es des Weiteren auch, dass anstelle eines sich über die gesamte Schmalseite beziehungsweise Stirnseite 7 erstreckenden weiteren Lichtleiters 3 sich auch mehrere weitere Lichtleiter entlang einer Schmalseite beziehungsweise Stirnseite des flächigen Lichtleiters angeordnet sind.

Bezüglich der Strukturen 5 zum Auskoppeln des Lichts in den Figuren 1 bis 7 ist auch noch anzumerken, dass diese entlang der Seite 8 in Längsrichtung angeordnet sind, wobei zum einen die Möglichkeit besteht, dass die mehreren Strukturen 5 zum Auskoppeln des Lichts, wie in den Figuren 1 und 5 gezeigt, den gleichen Abstand zueinander aufweisen. Alternativ hierzu wäre es aber auch denkbar, dass der Abstand zwischen den mehreren Strukturen zum Auskoppeln des Lichts variiert.

Dies ergibt sich insbesondere dadurch, dass die Lichtquellen 4 nur an den Stirnseiten 9 des weiteren Lichtleiters 3 angeordnet sind, wodurch deutlich mehr Freiheiten hinsichtlich der Positionierung der Strukturen 5 zum Auskoppeln des Lichts bestehen. Hierdurch ist es möglich, dass der Abstand im Prinzip unabhängig von der Leistung der Lichtquellen 4 beziehungsweise LEDs gewählt werden kann, um eine gleichmäßige Lichteinkopplung über die gesamte Schmalseite beziehungsweise Stirnseite 7 des flächigen Lichtleiters 2 hin zu erzielen.

Für den Fall, dass die Lichtquellen an den beiden gegenüberliegenden Stirnseiten des weiteren Lichtleiters angeordnet werden, kann beispielsweise über dessen gesamte Länge hinweg ein gleichmäßiger Abstand zwischen den Strukturen zum Auskoppeln des Lichts gewählt werden. Es wäre allerdings durchaus auch denkbar, dass der Abstand über die Länge des weiteren Lichtleiters hinweg variiert wird, um gezielt entweder eine gleichmäßigere Lichtabgabe beziehungsweise Lichteinkopplung in den flächigen Lichtleiter zu erzielen oder Variationen in der Lichteinkopplung hervorzurufen.

## Patentansprüche

1. Beleuchtungsanordnung (1) mit mindestens einer Lichtquelle (4), insbesondere einer LED, und einem flächigen Lichtleiter (2) zur Lichtabgabe über mindestens eine der Flachseiten (6) des flächigen Lichtleiters (2),
wobei die Beleuchtungsanordnung (1) mindestens einen weiteren Lichtleiter (3) aufweist, der an einer der Schmalseiten bzw. der Stirnseiten (7) des flächigen Lichtleiters (2) angeordnet ist,
wobei die Lichtquelle (4) derart an einer der Stirnseiten (9) des weiteren Lichtleiters (3) angeordnet ist, dass das Licht der Lichtquelle (4) über die Stirnseite (9) in den weiteren Lichtleiter (3) eingekoppelt wird,
wobei auf dem weiteren Lichtleiter (3) an der dem flächigen Lichtleiter (2) zugewandten Seite (8) mehrere Strukturen (5) zum Auskoppeln des Lichts aus dem weiteren Lichtleiter (3) vorgesehen sind, wobei jede der Strukturen (5) eine Bodenfläche (5b) und Mantelflächen (5a) aufweist, wobei die Bodenfläche (5b) dem flächigen Lichtleiter (2) zugewandt ist, und wobei sich die Mantelflächen (5a) seitlich an die Bodenfläche (5b) in Richtung des weiteren Lichtleiters (3) anschließen, und
wobei das über die Strukturen (5) zum Auskoppeln ausgekoppelte Licht über die Schmalseite bzw. die Stirnseite (7) in den flächigen Lichtleiter (2) eingekoppelt wird,
**dadurch gekennzeichnet,**
**dass** die Strukturen (5) zum Auskoppeln derart ausgestaltet sind, dass das Licht, welches aus dem weiteren Lichtleiter (3) in eine der Strukturen (5) zum Auskoppeln eintritt, reflektiert wird, wenn es auf die Bodenfläche (5b) einer Struktur (5) zum Auskoppeln trifft, und ausgekoppelt wird, wenn es auf die Mantelfläche (5a) der Struktur (5) zum Auskoppeln trifft.

2. Beleuchtungsanordnung nach Anspruch 1,
**dadurch gekennzeichnet,**
**dass** der weitere Lichtleiter (3) derart ausgestaltet ist, dass das von der Lichtquelle (4) über die Stirnseite (9) eingekoppelte Licht in Längsrichtung in dem weiteren Lichtleiter (3) verteilt wird.

3. Beleuchtungsanordnung nach einem der vorherigen Ansprüche,
**dadurch gekennzeichnet,**
**dass** der weitere Lichtleiter (3) schmal und länglich ausgebildet ist und/oder im Querschnitt im Wesentlichen rechteckförmig ausgebildet ist.

4. Beleuchtungsanordnung nach einem der vorherigen Ansprüche,
**dadurch gekennzeichnet,**
**dass** sich der weitere Lichtleiter (3) über die gesamte Länge der Schmalseite bzw. der Stirnseite (7) des flächigen Lichtleiters (2) erstreckt, an der er angeordnet ist.

5. Beleuchtungsanordnung nach einem der vorherigen Ansprüche,
**dadurch gekennzeichnet,**
**dass** die Strukturen (5) zum Auskoppeln unmittelbar an der Schmalseite bzw. der Stirnseite (7) des flächigen Lichtleiters (2) anliegen, an der der weitere Lichtleiter (3) angeordnet ist.

6. Beleuchtungsanordnung nach einem der Ansprüche 1-4,
**dadurch gekennzeichnet,**
**dass** die Strukturen (5) zum Auskoppeln beabstandet von der Schmalseite bzw. der Stirnseite (7) des flächigen Lichtleiters (2), an der der weitere Lichtleiter (3) angeordnet ist, angeordnet sind.

7. Beleuchtungsanordnung nach einem der vorherigen Ansprüche,
**dadurch gekennzeichnet,**
**dass** die Strukturen (5) zum Auskoppeln zylinderförmig, quaderförmig oder kegelstumpfförmig ausgebildet sind.

8. Beleuchtungsanordnung nach einem der vorherigen Ansprüche,
**dadurch gekennzeichnet,**
**dass** die mehreren Strukturen (5) zum Auskoppeln den gleichen Abstand zueinander aufweisen.

9. Beleuchtungsanordnung nach einem der Ansprüche 1 bis 7,
**dadurch gekennzeichnet,**
**dass** der Abstand zwischen den mehreren Strukturen (5) zum Auskoppeln variiert.

10. Beleuchtungsanordnung nach einem der vorherigen Ansprüche,
**dadurch gekennzeichnet,**
**dass** die Beleuchtungsanordnung (1) einen oder mehrere Reflektoren (10) aufweist, der/die derart angeordnet ist/sind, dass der wesentliche Teil des von der Lichtquelle (4) abgegebenen Lichts in den weiteren Lichtleiter (3) eingekoppelt und über die Strukturen (5) zum Auskoppeln aus dem weiteren Lichtleiter (3) ausgekoppelt und in den flächigen Lichtleiter (2) eingekoppelt wird.

11. Beleuchtungsanordnung nach einem der vorherigen Ansprüche,
**dadurch gekennzeichnet,**
**dass** die Beleuchtungsanordnung (1) mehrere Lichtquellen (4) aufweist, wobei vorzugsweise an beiden Stirnseiten (9) des weiteren Lichtleiters (3) Lichtquellen (4) angeordnet sind.

12. Beleuchtungsanordnung nach Anspruch 11,
**dadurch gekennzeichnet,**
**dass** die Beleuchtungsanordnung (1) mehrere weitere Lichtleiter (3) aufweist, wobei jeder der weiteren Lichtleiter (3) jeweils mindestens eine Lichtquelle (4) an einer seiner Stirnseiten (9) aufweist.

13. Beleuchtungsanordnung nach Anspruch 12,
**dadurch gekennzeichnet,**
**dass** an zwei gegenüberliegenden Schmalseiten bzw. Stirnseiten des flächigen Lichtleiters weitere Lichtleiter angeordnet sind oder
**dass** an drei oder mehr Schmalseiten bzw. Stirnseiten des flächigen Lichtleiters weitere Lichtleiter angeordnet sind.

## Claims

1. Lighting arrangement (1) comprising at least one light source (4), in particular an LED, and a flat light guide (2) for emitting light via at least one of the flat sides (6) of the flat light guide (2),
the lighting arrangement (1) comprising at least one further light guide (3) which is arranged on one of the narrow sides or the end faces (7) of the flat light guide (2),
the light source (4) being arranged on one of the end faces (9) of the further light guide (3) in such a way that the light of the light source (4) is coupled into the further light guide (3) via the end face (9),
a plurality of structures (5) for coupling out the light from the further light guide (3) being provided on the further light guide (3) on the side (8) facing the flat light guide (2), each of the structures (5) comprising a bottom surface (5b) and lateral surfaces (5a), the bottom surface (5b) facing the flat light guide (2), and the lateral surfaces (5a) adjoining the bottom surface (5b) laterally in the direction of the further light guide (3), and
the light coupled out via the structures (5) for coupling out being coupled into the flat light guide (2) via the narrow side or the end face (7),
**characterized in that**
the structures (5) for coupling out are designed such that the light entering one of the structures (5) for coupling out from the further light guide (3) is reflected when it strikes the bottom surface (5b) of a structure (5) for coupling out and is coupled out when it strikes the lateral surface (5a) of the structure (5) for coupling out.

2. Lighting arrangement according to claim 1,
**characterized in that**
the further light guide (3) is designed such that the light coupled in by the light source (4) via the end face (9) is distributed in the longitudinal direction in the further light guide (3).

3. Lighting arrangement according to either of the preceding claims,
**characterized in that**
the further light guide (3) is narrow and elongate and/or has a substantially rectangular cross-section.

4. Lighting arrangement according to any of the preceding claims,
**characterized in that**
the further light guide (3) extends over the entire length of the narrow side or the end face (7) of the flat light guide (2) on which side or end face the further light guide is arranged.

5. Lighting arrangement according to any of the preceding claims,
**characterized in that**
the structures (5) for coupling out lie directly on the narrow side or the end face (7) of the flat light guide (2) on which side or end face the further light guide (3) is arranged.

6. Lighting arrangement according to any of claims 1 to 4,
**characterized in that**
the structures (5) for coupling out are arranged at a distance from the narrow side or the end face (7) of the flat light guide (2) on which side or end face the further light guide (3) is arranged.

7. Lighting arrangement according to any of the preceding claims,
**characterized in that**
the structures (5) for coupling out are cylindrical, cuboid or frustoconical.

8. Lighting arrangement according to any of the preceding claims,
**characterized in that**
the plurality of structures (5) for coupling out are distanced equally from one another.

9. Lighting arrangement according to any of claims 1 to 7,
**characterized in that**
the distance between the plurality of structures (5) for coupling out varies.

10. Lighting arrangement according to any of the preceding claims,
**characterized in that**
the lighting arrangement (1) comprises one or more reflectors (10) which is/are arranged in such a way that the substantial part of the light emitted by the light source (4) is coupled into the further light guide (3) and, via the structures (5) for coupling out, is coupled out of the further light guide (3) and into the flat light guide (2).

11. Lighting arrangement according to any of the preceding claims,
**characterized in that**
the lighting arrangement (1) comprises a plurality of light sources (4), light sources (4) preferably being arranged on both of the end faces (9) of the further light guide (3).

12. Lighting arrangement according to claim 11,
**characterized in that**
the lighting arrangement (1) comprises a plurality of further light guides (3), each of the further light guides (3) comprising, on one of the end faces (9), at least one light source (4).

13. Lighting arrangement according to claim 12,
**characterized in that**
further light guides are arranged on two opposite narrow sides or end faces of the flat light guide, or
**in that** further light guides are arranged on three or more narrow sides or end faces of the flat light guide.

## Revendications

1. Agencement d'éclairage (1) comportant au moins une source de lumière (4), en particulier une DEL, et un guide de lumière (2) plat pour une émission de lumière par l'intermédiaire d'au moins l'un des côtés plats (6) du guide de lumière (2) plat,
dans lequel l'agencement d'éclairage (1) présente au moins un autre guide de lumière (3) qui est agencé sur l'un des côtés étroits ou des côtés frontaux (7) du guide de lumière (2) plat,
dans lequel la source de lumière (4) est agencée sur l'un des côtés frontaux (9) de l'autre guide de lumière (3) de telle sorte que la lumière de la source de lumière (4) est couplée dans l'autre guide de lumière (3) par l'intermédiaire du côté frontal (9),
dans lequel plusieurs structures (5) sont prévues sur l'autre guide de lumière (3) sur le côté (8) tourné vers le guide de lumière (2) plat pour découpler la lumière de l'autre guide de lumière (3), dans lequel chacune des structures (5) présente une surface de fond (5b) et des surfaces d'enveloppe (5a), dans lequel la surface de fond (5b) est tournée vers le guide de lumière (2) plat, et dans lequel les surfaces d'enveloppe (5a) se raccordent latéralement à la surface de fond (5b) en direction de l'autre guide de lumière (3), et
dans lequel la lumière découplée par l'intermédiaire des structures (5) pour le découplage est couplée dans le guide de lumière (2) plat par l'intermédiaire du côté étroit ou du côté frontal (7),
**caractérisé en ce que** les structures (5) pour le découplage sont conçues de telle sorte que la lumière qui entre dans l'une des structures (5) pour le découplage à partir de l'autre guide de lumière (3) est réfléchie lorsqu'elle rencontre la surface de fond (5b) d'une structure (5) pour le découplage, et est découplée lorsqu'elle rencontre la surface d'enveloppe (5a) de la structure (5) pour le découplage.

2. Agencement d'éclairage selon la revendication 1,
**caractérisé en ce que** l'autre guide de lumière (3) est conçu de telle sorte que la lumière couplée par la source de lumière (4) par l'intermédiaire du côté frontal (9) est répartie dans la direction longitudinale dans l'autre guide de lumière (3).

3. Agencement d'éclairage selon l'une des revendications précédentes,
**caractérisé en ce que** l'autre guide de lumière (3) est étroit et allongé et/ou a une section transversale sensiblement rectangulaire.

4. Agencement d'éclairage selon l'une des revendications précédentes,
**caractérisé en ce que** l'autre guide de lumière (3) s'étend sur toute la longueur du côté étroit ou du côté frontal (7) du guide de lumière (2) plat sur lequel il est agencé.

5. Agencement d'éclairage selon l'une des revendications précédentes,
**caractérisé en ce que** les structures (5) pour le découplage s'appliquent directement sur le côté étroit ou le côté frontal (7) du guide de lumière (2) plat, sur lequel est agencé l'autre guide de lumière (3).

6. Agencement d'éclairage selon l'une des revendications 1 à 4,
**caractérisé en ce que** les structures (5) pour le découplage sont agencées à distance du côté étroit ou du côté frontal (7) du guide de lumière (2) plat, sur lequel est agencé l'autre guide de lumière (3).

7. Agencement d'éclairage selon l'une des revendications précédentes,
**caractérisé en ce**
**que** les structures (5) pour le découplage sont réalisées en forme de cylindre, de parallélépipède ou de cône tronqué.

8. Agencement d'éclairage selon l'une des revendications précédentes,
**caractérisé en ce que** les plusieurs structures (5) pour le découplage présentent la même distance les unes par rapport aux autres.

9. Agencement d'éclairage selon l'une des revendications 1 à 7,
**caractérisé en ce que** la distance entre les plusieurs structures (5) pour le découplage varie.

10. Agencement d'éclairage selon l'une des revendications précédentes,
**caractérisé en ce que** l'agencement d'éclairage (1) présente un ou plusieurs réflecteurs (10) qui est/sont agencé(s) de telle sorte que la partie essentielle de la lumière émise par la source de lumière (4) est couplée dans l'autre guide de lumière (3) et est découplée de l'autre guide de lumière (3) par l'intermédiaire des structures (5) pour le découplage et est couplée dans le guide de lumière (2) plat.

11. Agencement d'éclairage selon l'une des revendications précédentes,
**caractérisé en ce que** l'agencement d'éclairage (1) présente plusieurs sources de lumière (4), dans lequel des sources de lumière (4) sont de préférence agencées sur les deux côtés frontaux (9) de l'autre guide de lumière (3).

12. Agencement d'éclairage selon la revendication 11,
**caractérisé en ce que** l'agencement d'éclairage (1) présente plusieurs autres guides de lumière (3), dans lequel chacun des autres guides de lumière (3) présente respectivement au moins une source de lumière (4) sur l'un de ses côtés frontaux (9).

13. Agencement d'éclairage selon la revendication 12,
**caractérisé en ce que** d'autres guides de lumière sont agencés sur deux côtés étroits ou côtés frontaux opposés du guide de lumière plat ou
**que** d'autres guides de lumière sont agencés sur trois côtés étroits ou côtés frontaux ou plus du guide de lumière plat.
